# EUROPEAN PATENT SPECIFICATION

(11) **EP 1 400 604 B1**
(45) Date of publication and mention of the grant of the patent: **07.02.2007**
(21) Application number: 03717543.7
(22) Date of filing: 09.04.2003
(51) Int. Cl.: C22C 14/00, B62K 19/04

(54) **AUTOMOBILE PART MADE FROM TITANIUM**
AUTOMOBILTEIL AUS TITAN
PIECE AUTOMOBILE EN TITANE

(30) Priority: 11.04.2002 JP 2002109623
(43) Date of publication of application: 24.03.2004
(73) Proprietor: NIPPON STEEL CORPORATION, Tokyo 100-8071 (JP); HONDA GIKEN KOGYO KABUSHIKI KAISHA, Minato-ku Tokyo 107-8556 (JP)
(72) Inventor: FUJII, Hideki C/O NIPPON STEEL CORPORATION, Futtsu-shi, Chiba 293-8511 (JP); TAKAHASHI, Kazuhiro C/O NIPPON STEEL CORPORATION, Hikari-shi, Yamaguchi 743-8510 (JP); MARUI, Yuji C/O K. K. HONDA GIJUTSU KENKYUSHO, Wako-shi, Saitama 351-0193 (JP); TAKAHASHI, Kyo C/O K. K. HONDA GIJUTSU KENKYUSHO, Wako-shi, Saitama 351-0193 (JP)
(74) Representative: Vossius & Partner
(86) International application number: PCT/JP2003/004509
(87) International publication number: WO 2003/085144

(56) References cited:
- JP-A- 5 279 773
- JP-A- 7 268 516
- JP-A- 2001 213 377
- US-A1- 2002 000 268
- PATENT ABSTRACTS OF JAPAN vol. 2003, no. 02, 5 February 2003 (2003-02-05) & JP 2002 294372 A (NIPPON STEEL CORP), 9 October 2002 (2002-10-09)

## Description

### TECHNICAL FIELD

The present invention relates to an auto part comprised of titanium characterized by a light weight and high strength. In particular, it relates to an auto part comprised of a JIS Type 2 or Type 3 commercially pure titanium or a low alloy titanium comprised of one of these plus a small amount of Fe.

### BACKGROUND ART

Titanium materials may be classified into alloy titanium and commercially pure titanium. Among these, commercially pure titanium has the characteristics of being comparatively superior in workability as well as having a moderate degree of strength characteristics and superior corrosion resistance and being relatively easy to weld as well. It has been worked into various shapes such as medium thick plates, hot rolled and cold rolled strips, thin sheets cut from the same, welded pipes obtained by shaping and welding these thin sheets, large diameter round bars, square bars, bar and wire coils, medium and small diameter bars and wires cut from the same, and seamless pipes made by hot extrusion for use in the fields making use of their light weight, high strength, high corrosion resistance, and other characteristics such as aircraft, chemicals, marine structures, electric power, etc. where such characteristics are required. Further, recently, remarkable progress has been made in application to automobiles and other consumer products. Various titanium parts are now being made frequent use of in these fields.

Such commercially pure titanium is classified into JIS Type 1 to Type 4 according to the added elements and strength characteristics. In the most general use JIS Type 2, the material is limited to a maximum of 0.20 wt% of oxygen, a maximum of 0.05 wt% of nitrogen, and a maximum of 0.25 wt% of Fe. Further, JIS Type 3 having a higher strength than JIS Type 2 is limited to a maximum of 0.30 wt% of oxygen, a maximum of 0.07 wt% of nitrogen, and a maximum of 0.30 wt% of Fe. (Note that in the following description, the amounts of chemical components are wt%.)

In actuality, however, these JIS Type 2 and Type 3 commercially pure titaniums only contain at most 0.015% of nitrogen and at most 0.1% of Fe at the present time. With the exception of containing 0.07 to 0.3% of oxygen and unavoidable impurities, they are literally pure titanium.

These conventional JIS Type 2 and JIS Type 3 commercially pure titaniums, as explained above, are formed into products of various sectional shapes and dimensions and are being used in a broad spectrum of fields. When applying them to mufflers, exhaust pipes, motorcycle rear forks, frames, and other auto parts etc., they are worked into complicated shapes by bending, forging, flat rolling (cold rolling bar and wire of circular cross-sections into sheet shapes), pipe contraction, drawing, pipe expansion, punching, bore-expanding, and other cold working processes. Therefore, the ductility is consumed in the working and sometimes the ductility of the part after being worked becomes small partially. On the other hand, auto parts will probably be used under increasingly severe environments in the future, so parts with a large residual ductility have been strongly sought.

To make the residual ductility of a part after being worked increase, it is necessary to improve the original ductility of the material. Regarding the latter, in high strength titanium alloys, as a method for securing a high ductility, as described in Japanese National Publication (Tokuhyo) No. 8-833292 (International Publication No. W096/33292), there is the method of simultaneously adding Fe and nitrogen. This method is believed to be able to be applied even to titanium materials of a strength level corresponding to the lowest strength JIS Type 2 or Type 3, but if adding close to 1% of Fe as in this method, a large amount of the β-phase (bcc crystal structure) of a different crystal structure from the α-phase (hcp crystal structure) of the matrix is produced, the modulus of elasticity and heat expansion characteristics become different from the conventional case of containing only the α-phase as the main phase, and the problem arises that it is necessary to readjust the shape of the part or production process or method of working so as to secure compatibility with the surrounding parts.

### DISCLOSURE OF INVENTION

The present invention provides a titanium auto part comprised of a titanium material having a strength equal to the conventional JIS Type 2 and Type 3 and a phase structure enabling design of similar parts and processes as conventional JIS Type 2 and Type 3 titanium and having a high residual ductility after being worked.

The inventors engaged in comprehensive studies on the relationship between the composition and properties of titanium materials of various chemical compositions, discovered a relationship of strength and ductility with components such as the oxygen equivalent value, Fe concentration, and nitrogen concentration, and perfected the present invention by limiting the range of chemical composition enabling provision of a titanium auto part having almost the same strength level and phase configuration as the conventional JIS Type 2 and Type 3 titanium material and having a higher residual ductility after working the product compared with the past.

The present invention is based on this technical idea and has as its gist the following:
(1) A titanium auto part characterized by containing, by wt%, Fe: 0.15 to 0.5%, nitrogen: 0.015 to 0.04%, oxygen, and the balance of titanium and unavoidable impurities, wherein when the Fe content is [Fe], the nitrogen content is [N], and the oxygen content is [O], the oxygen equivalent value Q = [O] + 2.77 [N] + 0.1 [Fe] is Q:0.11 to 0.28%.
(2) A titanium auto part as set forth in (1) characterized in that the oxygen equivalent value Q is 0.11 to 0.20%.
(3) A titanium auto part as set forth in (1) or (2), characterized in that the auto part is one of a muffler, exhaust pipe, motorcycle frame, motorcycle rear fork, and motorcycle front fork inner pipe.

### BRIEF DESCRIPTION OF DRAWINGS

FIG. 1 shows a muffler and exhaust pipe of a motorcycle as a test example of the present invention.
FIG. 2 shows a motorcycle frame of a motorcycle as a test example of the present invention.
FIG. 3 shows a motorcycle rear fork of a motorcycle as a test example of the present invention.
FIG. 4 shows a motorcycle front fork inner pipe of a motorcycle as a test example of the present invention.
FIG. 5 shows the appearance of a motorcycle as a test example of the present invention.

### BEST MODE FOR CARRYING OUT THE INVENTION

The inventors engaged in intensive studies on the relationship between the composition and properties in titanium materials of various compositions and as a result discovered the following important phenomenon. That is,
[1] If the amount of Fe added exceeds 0.5%, a large amount of β-phase (bcc crystal structure) different in crystal structure from the α-phase of the matrix is produced, and the modulus of elasticity and heat expansion characteristics become remarkably different from the case of containing only the conventional α-phase as a main phase, but if the amount of Fe added is not more than 0.5%, the amount of production of the β-phase is small and there is no need for readjusting the shape of the part, the production process, etc. for securing compatibility with the surrounding parts. That is, it is possible to produce auto parts by the same designs and production processes as in the past.
[2] Even with an amount of Fe of a maximum of 0.5% with little production of the β-phase, if the amount added is 0.15% or more, addition of up to 0.04% of nitrogen enables achievement of an increase in strength without causing a reduction in the ductility. Alternatively, it is possible to improve the ductility without causing a reduction in the strength. That is, it is possible to improve the balance of strength and ductility.

The present invention was achieved based on the above two discoveries. Note that in the above discovery [2], if the amount of Fe added exceeds 0.6%, the effect disappears once, but if over 0.9%, the amount of the β-phase superior in the balance of strength and ductility increases, so an improvement appears in the relationship of strength and ductility due to the combined addition of Fe and nitrogen again. This effect, however, is effective for the high strength alloy such as described in Japanese National Publication (Tokuhyo) No. 8-833292 (International Publication No. WO96/33292), but is excessively strong for a titanium material of a strength of the JIS Type 2 or Type 3 class covered by the present invention and conversely impairs the ductility or workability sought in titanium materials of this class, so is preferably not applied to a material of a level of strength covered by the present invention.

Further, as explained in the above [1], in this case, since the amount of the β-phase is large, a need ends up arising for readjusting the part shape or production process to secure compatibility with the surrounding parts. Sufficient working cannot necessarily be performed with a conventional production process.

The reasons for limiting the contents of oxygen, nitrogen, and Fe in the above [1] will be explained next.

In the above [1], the amount of Fe added was made 0.15 to 0.5%. At least 0.15% was added because to improve the ductility without reducing the strength by the combined addition with nitrogen or to improve the strength without reducing the ductility, it is necessary to add at least 0.15% of Fe as described in the above discovery [2].

If adding more than 0.5%, however, not only does the effect disappear, but also, as explained in [1], a large amount of β-phase (bcc crystal structure) different in crystal structure from the α-phase (hcp crystal structure) of the matrix is produced, the modulus of elasticity and the heat expansion characteristics become remarkably different from the case of containing only the conventional α-phase as the main phase, so a need arises to readjust the part shape or production process etc. to secure compatibility with the surrounding parts, and it becomes difficult to produce an auto part by a design or production process as in the past.

Further, in the above [1], the amount of nitrogen added was made 0.015 to 0.04%. The reason is as follows. That is, if the amount of the nitrogen added is less than 0.015%, almost no improvement is recognized in the relationship between the strength and ductility due to the combined addition of Fe and nitrogen, and it is not possible to increase the ductility without reducing the strength or increase the strength without impairing the ductility. Therefore, in the present invention, the amount of nitrogen added was made at least 0.015%. Further, if the amount of the nitrogen added exceeds 0.04%, compounds of Ti and nitrogen are produced - resulting in a remarkable drop in ductility and the effect of improving the relationship between strength and ductility is erased. Therefore, the upper limit on the amount of nitrogen added was made 0.04%.

Further, in the above (1), the amount of oxygen added was made a value giving an oxygen equivalent value Q = [O] + 2.77 [N] + 0.1 [Fe] of 0.11 to 0.28.

Here, [Fe], [N], and [O] show the content of Fe, the content of nitrogen, and the content of oxygen. The "oxygen equivalent value" is an indicator comprehensively showing the ability of oxygen, nitrogen, and Fe to increase the strength of titanium. When making the ability of a unit wt% of oxygen to strengthen titanium as "1", it is shown that a unit wt% of nitrogen exhibits a strengthening ability of 2.77 times that or that a unit wt% of Fe exhibits one of 0.1 time that.

In the present invention, Q was made a range of 0.11 to 0.28 because making the value of Q this range makes it possible to achieve a level of strength equal to that of the current JIS Type 2 and Type 3 covered by the present invention. That is, when Q is less than 0.11, the strength is too low and it is not possible to obtain a material having a strength of the general JIS Type 2 class actually being marketed, it is necessary to reduce the relative concentration of oxygen in the titanium, and it is necessary to use an expensive low oxygen sponge. Further, if Q is over 0.28, the strength becomes too high and the problem arises that cold working becomes more difficult compared with the JIS Type 3 class currently on the market.

A titanium material comprised of the chemical composition limited as described above has a strength equal to that of the conventional JIS Type 2 to JIS Type 3 and has a ductility higher than these. Auto parts comprised of this titanium material has a higher residual ductility after cold working compared with even an auto part comprised of the conventional JIS Type 2 or Type 3 and can be used with greater confidence. Further, since the phase configuration enables part designs similar to those of the conventional JIS Type 2 and Type 3, there is no need to readjust the part shape etc. to secure compatibility with the surrounding parts and production by designs and production processes like in the past becomes possible.

Next, in the above [2], the range of the value of the oxygen equivalent value Q was made a range of 0.11 to 0.20. A greater ductility is required in the production process in a titanium auto part of the range of the present invention in the case of a soft material often subjected to more severe cold working. That is, if applying the present invention to a titanium auto part having a Q value in the range of 0.11 to 0.20 of the soft level of strength corresponding to JIS Type 2, the effect is particularly strongly manifested.

Note that the titanium spoken of in the present invention is substantially comprised of Ti other than the oxygen, nitrogen, Fe, and unavoidable impurities. Here, the "unavoidable impurities" indicates the less than 0.05% of Ni or Cr, the less than 0.015% of carbon, the less than 100 ppm of hydrogen, etc. entering from the stock sponge titanium or scrap titanium used or from the surface in the middle of the production process.

Further, in the above [1] and [2], when the amount of Fe added is a maximum of 0.3%, the compositions of the present invention are those belonging to JIS Type 2 or Type 3. As explained in the section of the Prior Art, commercially pure titanium of JIS Type 2 and Type 3 actually circulating on the market has a high Fe content of about 0.1% or so and a nitrogen content of a high 0.015% or so. While falling with the same JIS standard, the material is different.

Further, when the Fe content exceeds 0.3%, the result is a low alloy titanium material not falling under the category of JIS Type 2 or Type 3.

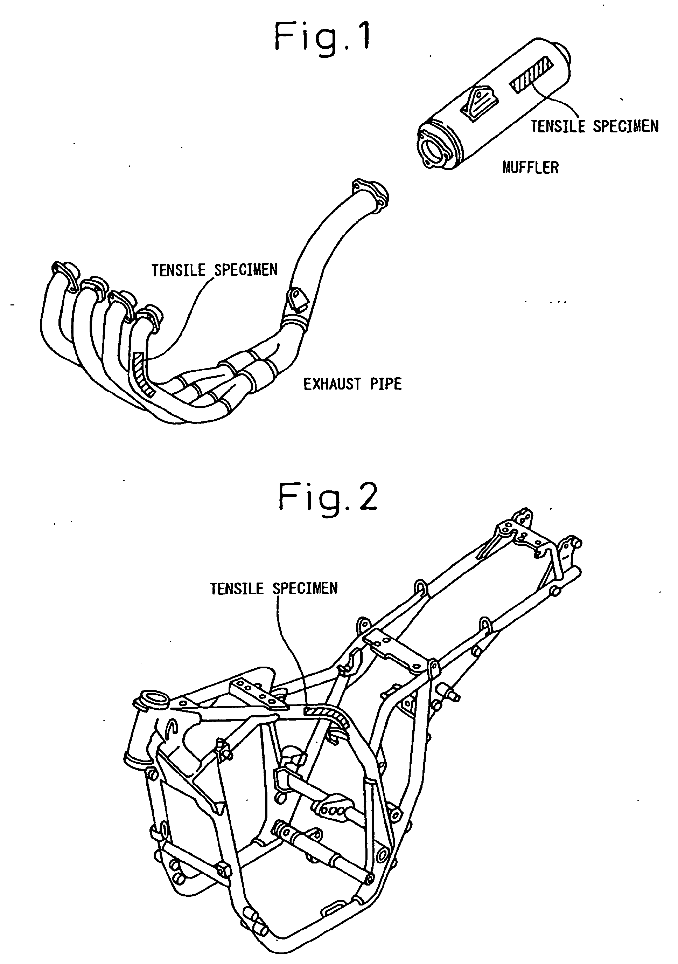

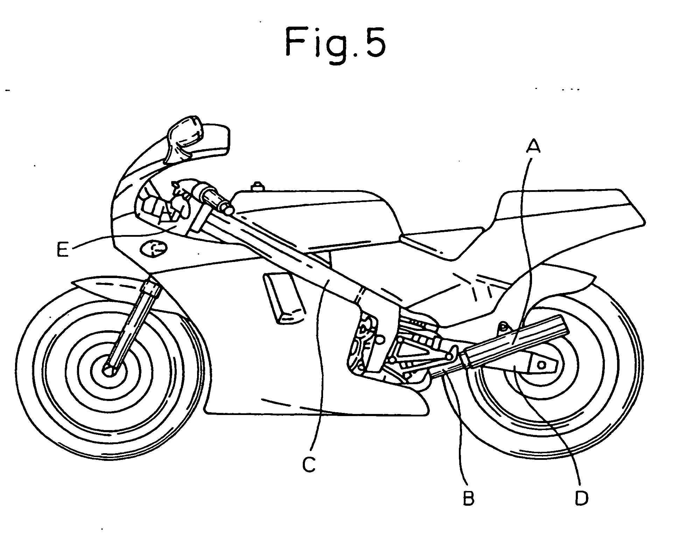

Next, the above [3] limits the auto part to a muffler, exhaust pipe, motorcycle frame, motorcycle rear fork, or motorcycle front fork inner pipe. These parts have the appearances shown in FIGS. 1 to 4. For example, taking as an example a motorcycle, the material is used for the locations shown in FIG. 5 (muffler (A), exhaust pipe (B), frame (C), rear fork (D), or front fork inner pipe (E)). These parts perform the functions shown in Table 1. By making these parts out of titanium, the body is made lighter in weight and the fuel economy and operability are improved. Further, as shown in Table 1, these parts are formed by cold working such as pressing (restriction, expansion, punch stretching), bending, pipe expansion, etc. They are auto parts where particularly good effects of the present invention can be expected.

### Embodiments

Below, the present invention will be explained in detail by embodiments based on test examples.

### (Test 1)

Titanium pipes (1 mm thickness, 48 mm diameter) of the compositions shown in Test Nos. 1 to 11 of Table 2 etc. are used to produce mufflers and evaluate the production characteristics by exactly the same method as JIS Type 2. Test strips of 10 mm width and 150 mm length are cut out in the longitudinal direction, and tensile tests are conducted at a gauge length of 50 mm to measure the tensile strength and elongation. The locations where the test pieces were taken are shown in FIG. 1. The test results are shown in Table 2.

In Table 2, Test Nos. 5, 8, 9, and 11 of examples of the present invention all could be sufficiently worked into mufflers and had the same extent of strength and at least 2% higher residual elongation compared with conventional commercially pure titanium (comparative example) having the same oxygen equivalent values, having no Fe or nitrogen deliberately added, and containing only unavoidable amounts of Fe and nitrogen present in stock sponge titanium.

That is, Test No. 5 gives at least 2% higher residual elongation compared with Test No. 4 while Test Nos. 8, 9, and 11 give the same compared with Test No. 6, that is, the effect of the present invention is exhibited. Further, Test Nos. 1 and 3 give extremely high residual elongations of at least 18%. In particular, Test No. 3 has an equal tensile strength and at least 2% higher residual elongation compared with conventional commercially pure titanium having the same oxygen equivalent value, having no Fe or nitrogen deliberately added, and containing only unavoidable amounts of Fe and nitrogen present in stock sponge titanium. However, both Test Nos. 1 and 3 only give insufficient strength levels far below the tensile strength of the most general use JIS Type 2 material of Test No. 4. The sponge titanium used also is higher in production costs due to use of a high purity material containing only a maximum of 0.05 wt% of oxygen. The effect of the present invention cannot be sufficiently exhibited. This is because the oxygen equivalent value Q was lower than the 0.11 of the lower limit in the present invention.

Test Nos. 7 and 10 only give tensile strengths and residual elongations equal to those of conventional commercially pure titanium (Test No. 6) having the same oxygen equivalent value, having no Fe or nitrogen deliberately added, and containing only unavoidable amounts of Fe and nitrogen present in stock sponge titanium. The effect of the present invention is not sufficiently exhibited. This is because the amount of Fe added in the case of Test No. 7 or the amount of nitrogen added in the case of Test No. 10 was less than the lower limit of the present invention.

### (Test 2)

Titanium pipes (2.0 mm thickness, 32 mm diameter) of the compositions shown in Test Nos. 12 to 22 of Table 3 etc. are used to produce motorcycle frames and evaluate the production characteristics by exactly the same method as JIS Type 2 or Type 3. Test strips of 10 mm width and 150 mm length are cut out in the longitudinal direction from the locations shown in FIG. 2, the ends of the test pieces are processed to gripping parts by bending, and tensile tests are conducted at a gauge length of 50 mm to measure the tensile strength and elongation. The test results are shown together in Table 3. Note that at the initial stage of the tensile test, the curved test pieces gradually deformed to become straight from the curved states and then were elongated and broke.

In Table 3, Test Nos. 13, 14, 17, 19, and 20 of examples of the present invention all could be sufficiently worked into mufflers and had at least 2% higher residual elongation values compared with conventional commercially pure titanium (comparative example) having the same oxygen equivalent values and strength levels, having no Fe or nitrogen deliberately added, and containing only unavoidable amounts of Fe and nitrogen present in stock sponge titanium.

That is, Test Nos. 13 and 14 give the same extent of strength and at least 2% higher elongation compared with Test No. 12 (conventional JIS Type 2), Test No. 17 gives the same compared with Test No. 16 (conventional JIS Type 3), and Test Nos. 19 and 20 give the same compared with Test No. 18 (conventional JIS Type 3). That is, the effect of the present invention is exhibited.

On the other hand, Test No. 15 ends up cracking during work. The reason was as follows: That is, the amount of Fe added exceeded the upper limit of the present invention, so a large amount of β-phase (bcc crystal structure) different in crystal structure from the α-phase (hcp crystal structure) of the matrix was produced, and the modulus of elasticity and heat expansion characteristic became remarkably different from conventional pure titanium containing only the α-phase as the main phase. However, since the parts were produced by the same design and production process as those of conventional pure titanium without adjusting the shape of the part or adjusting the shaping method for securing compatibility with the surrounding parts, cracking ended up occurring during working.

Further, Test No. 21 also ended cracking during working. This is because the amount of nitrogen added exceeded the upper limit of the present invention and therefore compounds of Ti and nitrogen were produced, the ductility was impaired, and the effect of the present invention could not be achieved.

Test No. 22 also ended up cracking during working, but this was due to the Q exceeding 0.28 and therefore the strength becoming too high, the ductility relatively falling, and cold working becoming difficult compared with the JIS Type 3 class circulating on the usual market.

### (Test 3)

Titanium pipes (1 mm thickness, 38 mm diameter) of the compositions shown in Test Nos. 23 to 24 of Table 4 etc. are used to produce exhaust pipes and evaluate the production characteristics by exactly the same method as JIS Type 2. Curved test strips of 10 mm width and 150 mm length are cut out in the longitudinal direction from the locations shown in FIG. 1, the ends of the test pieces are processed to gripping parts by bending, and tensile tests are conducted at a gauge length of 50 mm to measure the tensile strength and elongation. The test results are shown together in Table 4. Note that at the initial stage of the tensile test, the curved test pieces gradually deformed to become straight from the curved states and then were elongated and broke.

In Table 4, Test No. 24 of an example of the present invention could be worked without causing cracking etc. by exactly the same method as the usual pure titanium JIS Type 2 (Test No. 23), had a level of strength equal to that of ordinary pure titanium (Test No. 23), but had a residual elongation exceeding it.

### (Test 4)

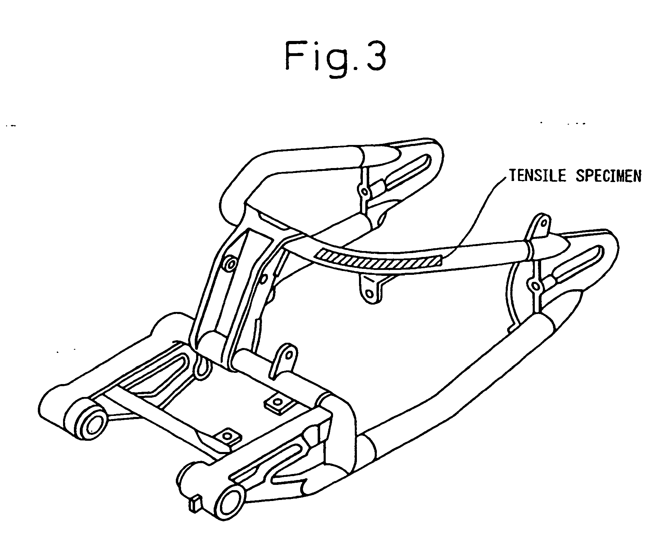

Titanium pipes (1.5 mm thickness, 32 mm diameter) of the compositions shown in Test Nos. 25 to 26 of Table 4 etc. are used to produce motorcycle rear forks and evaluate the production characteristics by exactly the same method as JIS Type 3. Test strips of 10 mm width and 150 mm length are cut out in the longitudinal direction from the locations shown in FIG. 3, the ends of the test pieces are processed to gripping parts by bending, and tensile tests are conducted at a gauge length of 50 mm to measure the tensile strength and elongation. The test results are shown together in Table 4. Note that at the initial stage of the tensile test, the curved test pieces gradually deformed to become straight from the curved states and then were elongated and broke.

In Table 4, Test No. 26 of an example of the present invention could be worked without causing cracking etc. by exactly the same method as the usual pure titanium JIS Type 3 (Test No. 25), had a level of strength equal to that of ordinary pure titanium (Test No. 25), but had a residual elongation exceeding it.

### (Test 5)

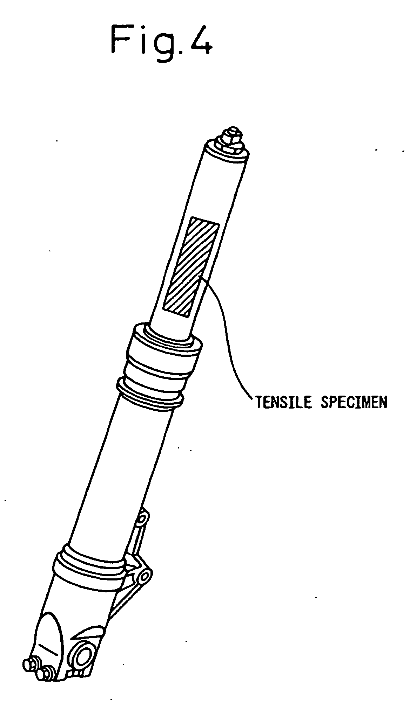

Titanium pipes (3 mm thickness, 32 mm diameter) of the compositions shown in Test Nos. 27 to 28 of Table 4 etc. are used to produce motorcycle front fork inner pipes and evaluate the production characteristics by exactly the same method as JIS Type 3. Test strips of 10 mm width and 150 mm length are cut out in the longitudinal direction from the locations shown in FIG. 4, and tensile tests are conducted at a gauge length of 50 mm to measure the tensile strength and elongation. The test results are shown together in Table 4.

In Table 4, Test No. 28 of an example of the present invention could be worked without causing cracking etc. by exactly the same method as the usual pure titanium JIS Type 3 (Test No. 27), had a level of strength equal to that of ordinary pure titanium (Test No. 27), but had a residual elongation exceeding it.

**Table 1**

| Fig. no. | Notation in FIG. 5 and part name | Role | Material | working |
|---|---|---|---|---|
| 1 | A, muffler | Silencing of engine exhaust noise | Pipes/plates/ bars/wires | Pressing (drawing, bore-expanding/ stretch-expanding) Welding Pipe bending Welding |
| 1 | B, exhaust pipe | Pipe connecting from engine to muffler | | |
| 2 | C, frame | Frame of body of motorcycle | Pipe/plates/ bars/wires | Pressing (drawing, stretch-expanding) Welding |
| 3 | D, rear fork | Rear wheel suspension | | |
| 4 | E, front fork inner pipe | Part of front wheel suspension parts | Pipes | Pipe expansion |

**Table 2**

| Test no. | Chemical composition (wt%) | | | | ** Workability | Tensile strength (MPa) | Elongation (%) | Remarks |
|---|---|---|---|---|---|---|---|---|
| | Oxygen | Nitrogen | Fe | Oxygen equivalent Q* | | | | |
| 1 | 0.0225 | 0.015 | 0.16 | 0.08 | Good | 372 | 19.2 | Comp. ex. |
| 2 | 0.0812 | 0.005 | 0.05 | 0.10 | Good | 392 | 16.5 | Comp. ex. |
| 3 | 0.0425 | 0.015 | 0.16 | 0.10 | Good | 395 | 18.6 | Comp. ex |
| 4 | 0.1012 | 0.005 | 0.05 | 0.12 | Good | 490 | 11.5 | Comp. ex |
| 5 | 0.0529 | 0.017 | 0.20 | 0.12 | Good | 492 | 13.6 | Inventions 2, 3 |
| 6 | 0.1412 | 0.005 | 0.05 | 0.16 | Good | 513 | 10.2 | Comp. ex. |
| 7 | 0.0778 | 0.025 | 0.13 | 0.16 | Good | 514 | 10.5 | Comp. ex |
| 8 | 0.0738 | 0.025 | 0.17 | 0.16 | Good | 515 | 13.7 | Inventions 2, 3 |
| 9 | 0.0796 | 0.020 | 0.25 | 0.16 | Good | 516 | 13.7 | Inventions 2, 3 |
| 10 | 0.0990 | 0.013 | 0.25 | 0.16 | Good | 516 | 10.4 | Comp. ex. |
| 11 | 0.0879 | 0.017 | 0.25 | 0.16 | Good | 517 | 13.8 | Inventions 2, 3 |

| | | | | | | | | |
|---|---|---|---|---|---|---|---|---|
| *: Q = [O] + 2.77 [N] + 0.1 [Fe] ([O], [N], and [Fe] are contents of oxygen, nitrogen, and Fe (wt%)) **: Good when able to be worked without causing cracking etc., otherwise poor. | | | | | | | | |

**Table 3**

| Test no. | Chemical composition (wt%) | | | | ** Workability | L-direction | Elongation (%) | Remarks |
|---|---|---|---|---|---|---|---|---|
| | Oxygen | Nitrogen | Fe | Oxygen equivalent Q* | | | | |
| 12 | 0.1612 | 0.005 | 0.05 | 0.18 | Good | 538 | 9.6 | Comp. ex. |
| 13 | 0.0858 | 0.025 | 0.25 | 0.18 | Good | 540 | 11.9 | Inventions 2, 3 |
| 14 | 0.0851 | 0.018 | 0.45 | 0.18 | Good | 541 | 11.8 | Inventions 2, 3 |
| 15 | 0.0701 | 0.018 | 0.60 | 0.18 | Poor | - | - | Comp. ex |
| 16 | 0.2112 | 0.005 | 0.05 | 0.23 | Good | 560 | 8.5 | Comp. ex |
| 17 | 0.1308 | 0.025 | 0.30 | 0.23 | Good | 562 | 10.7 | Inventions 1, 3 |
| 18 | 0.2328 | 0.008 | 0.05 | 0.26 | Good | 591 | 8.0 | Comp. ex |
| 19 | 0.1558 | 0.025 | 0.35 | 0.26 | Good | 590 | 11.2 | Inventions 1, 3 |
| 20 | 0.1225 | 0.037 | 0.35 | 0.26 | Good | 592 | 11.5 | Inventions 1, 3 |
| 21 | 0.1059 | 0.043 | 0.35 | 0.26 | Poor | - | - | Comp. ex. |
| 22 | 0.1869 | 0.030 | 0.30 | 0.30 | Poor | - | - | Comp. ex |

| | | | | | | | | |
|---|---|---|---|---|---|---|---|---|
| *: Q = [O] + 2.77 [N] + 0.1 [Fe] ([O], [N], and [Fe] are contents of oxygen, nitrogen, and Fe (wt%)) **: Good when able to be worked without causing cracking etc., otherwise poor. | | | | | | | | |

**Table 4**

| Test no. | Part name | Chemical composition (wt%) | | | | ** Workbility | L-direction | Elongation (%) | Remarks |
|---|---|---|---|---|---|---|---|---|---|
| | | Oxygen | Nitrogen | Fe | Oxygen equivalent Q* | | | | |
| 23 | Exhaust pipe | 0.1412 | 0.005 | 0.05 | 0.16 | Good | 515 | 8.3 | Comp. ex. |
| 24 | Exhaust pipe | 0.0796 | 0.020 | 0.25 | 0.16 | Good | 518 | 10.6 | Inventions 1, 3 |
| 25 | Rear fork | 0.2412 | 0.005 | 0.05 | 0.26 | Good | 587 | 15.7 | Comp. ex. |
| 26 | Rear fork | 0.1558 | 0.025 | 0.35 | 0.26 | Good | 585 | 19.1 | Inventions 1, 3 |
| 27 | Front fork inner pipe | 0.2412 | 0.005 | 0.05 | 0.26 | Good | 592 | 17.8 | Comp. ex |
| 28 | Front fork inner pipe | 0.1558 | 0.025 | 0.35 | 0.26 | Good | 593 | 21.0 | Inventions 1, 3 |

| | | | | | | | | | |
|---|---|---|---|---|---|---|---|---|---|
| *: Q = [O] + 2.77 [N] + 0.1 [Fe] ([O], [N], and [Fe] are contents of oxygen, nitrogen, and Fe (wt%)) **: Good when able to be worked without causing cracking etc., otherwise poor. | | | | | | | | | |

### INDUSTRIAL APPLICABILITY

As explained above, by applying the present invention, it is possible to provide a titanium auto part comprised of a titanium material having a strength equal to the conventional JIS Type 2 and Type 3 and of a phase structure enabling production by the same parts and processes as a conventional JIS Type 2 and Type 3 titanium material and possible to obtain extremely advantageous effects industrially speaking.

## Claims

1. A titanium auto part **characterized by** containing, by wt%,
Fe: 0.15 to 0.5%,
nitrogen: 0.015 to 0.04%, oxygen, and
the balance of titanium and unavoidable impurities, wherein,
when the Fe content is [Fe], the nitrogen content is [N], and the oxygen content is [O], the oxygen equivalent value Q = [O] + 2.77 [N] + 0.1 [Fe] is Q:0.11 to 0.28%.

2. A titanium auto part as set forth in claim 1 **characterized in that** the oxygen equivalent value Q is 0.11 to 0.20%.

3. A titanium auto part as set forth in claim 1 or 2, **characterized in that** the auto part is one of a muffler, exhaust pipe, motorcycle frame, motorcycle rear fork, and motorcycle front fork inner pipe.

## Patentansprüche

1. Titanfahrzeugteil, **dadurch gekennzeichnet, daß** es in Gewichtsprozent enthält:
Fe: 0,15 bis 0,5 %,
Stickstoff: 0,015 bis 0,04 %, Sauerstoff, und
Rest Titan und unvermeidbare Verunreinigungen, wobei
wenn der Fe-Anteil [Fe] ist, der Stickstoffanteil [N] ist, und der Sauerstoffanteil [O] ist, der Sauerstoffäquivalentwert Q = [O] + 2,77 [N] + 0,1 [Fe] gleich Q: 0,11 bis 0,28 % ist.

2. Titanfahrzeugteil nach Anspruch 1, **dadurch gekennzeichnet, daß** der Sauerstoffäquivalentwert Q gleich 0,11 bis 0,20 % ist.

3. Titanfahrzeugteil nach Anspruch 1 oder 2, **dadurch gekennzeichnet, daß** das Fahrzeugteil ein Schalldämpfer, ein Abgasrohr, ein Motorradrahmen, eine Motorradhintergabel oder ein Motorradvordergabel-Innenrohr ist.

## Revendications

1. Pièce pour véhicule automobile en titane **caractérisée en ce qu'**elle contient, en pourcentage en masse,
Fe : 0,15 à 0,5 %,
azote : 0,015 à 0,04 %, de l'oxygène, et
le complément de titane et d'impuretés inévitables, où,
quand la teneur en Fe est [Fe], la teneur en azote est [N] et la teneur en oxygène est [O], l'équivalent d'oxygène Q = [O] + 2,77 [N] + 0,1 [Fe] est Q:0,11 à 0,28 %.

2. Pièce pour véhicule automobile en titane selon la revendication 1, **caractérisée en ce que** l'équivalent d'oxygène Q est 0,11 à 0,20 %.

3. Pièce pour véhicule automobile en titane selon la revendication 1 ou 2, **caractérisée en ce que** la pièce pour véhicule automobile est une pièce parmi un silencieux, un tuyau d'échappement, un châssis de motocyclette, une fourche arrière de motocyclette et un tube interne de fourche avant de motocyclette.
